# EUROPÄISCHE PATENTSCHRIFT

(11) **EP 4 312 485 B1**
(45) Veröffentlichungstag und Bekanntmachung des Hinweises auf die Patenterteilung: **06.08.2025**
(21) Anmeldenummer: 23732873.7
(22) Anmeldetag: 12.06.2023
(51) Int. Cl.: A01B 51/02, B60B 35/10, B62D 49/06, B60G 99/00

(54) **SELBSTFAHRENDES ZWEISPURIGES STELZENFAHRZEUG**
SELF-DRIVING TWO-TRACK GANTRY VEHICLE
VÉHICULE À PORTIQUE À DEUX VOIES À CONDUITE AUTONOME

(30) Priorität: 13.06.2022 DE 102022114860
(43) Veröffentlichungstag der Anmeldung: 07.02.2024
(73) Patentinhaber: Biocare Gesellchaft Für Biologische Schutz-Mittel MbH, 37586 Dassel (DE); Otto-von-Guericke-Universität Magdeburg, 39106 Magdeburg (DE)
(72) Erfinder: BEITZEN-HEINEKE, Wilhelm, 37586 Dassel (DE); SCHMIDT, Stephan, 37586 Dassel (DE); HEIDFELD, Hannes, 37586 Dassel (DE); KONRADT, Robert, 37586 Dassel (DE)
(74) Vertreter: Grättinger Möhring von Poschinger Patentanwälte Partnerschaft mbB
(86) Internationale Anmeldenummer: PCT/EP2023/065633
(87) Internationale Veröffentlichungsnummer: WO 2023/242113

(56) Entgegenhaltungen:
- EP-A1- 2 820 950
- CN-A- 103 802 897
- CN-A- 112 078 662
- CN-A- 113 002 254
- DE-A1- 102016 112 292

## Beschreibung

Die vorliegende Erfindung betrifft ein selbstfahrendes zweispuriges Stelzenfahrzeug, insbesondere für land- und forstwirtschaftliche Anwendungen.

Selbstfahrende zweispurige Stelzenfahrzeuge sind insbesondere im Bereich von land-, garten- und forstwirtschaftlichen Anwendungen (einschließlich Weinbau) im Einsatz. Aufgrund ihrer Bauweise weisen Stelzenfahrzeuge typischerweise eine große Bodenfreiheit und große Spurweite auf und sind daher geeignet, land-, garten- und forstwirtschaftliche Kulturen mit in Reihen angebauten Pflanzen (begrenzter Wuchshöhe) zu befahren, wobei sich zwischen den beiden Spuren mindestens eine Pflanzenreihe befindet.

Typischerweise kommen solche selbstfahrenden zweispurigen Stelzenfahrzeuge dabei bei der Pflege der Kultur (einschließlich Düngung und Schädlingsbekämpfung) sowie der Ernte zum Einsatz. Die FR 2550049 A1, die US 2015/0034736 A1 und die EP 2448808 B1 offenbaren beispielhaft verschiedene bekannte selbstfahrende zweispurige Stelzenfahrzeuge. Gleiches gilt für die CN 113 002 254 A, die CN 112 078 662 A und die CN 103 802 897 A. Die erstgenannte CN 113 002 254 A beschreibt dabei ein selbstfahrendes Fahrzeug zum Überwachen von Feldfrüchten, welches eine Basisstruktur und vier Radträgereinheiten aufweist, die jeweils über eine Parallellenkeranordnung mittels eines Linearaktuators in eine eingefahrene sowie eine ausgefahrene Position schwenkbar sind.

Stelzenfahrzeuge werden auch eingesetzt um mittels Ausbringgeräten kugelförmige, Nützlingsorganismen enthaltende Ausbringeinheiten wirtschaftlich großflächig auf land-, forst- bzw. gartenwirtschaftlichen Beständen auszubringen. Die kugelförmigen Ausbringeinheiten werden dabei durch Ausblasrohre mittels Druckluft ausgeblasen und dadurch großflächig verteilt.

Typischerweise weist ein derartiges Ausbringgerät ein mittiges Ausblasrohr mit einer in der Längsrichtung des Ausbringfahrzeugs weisenden Mündungsöffnung und mindestens zwei (oftmals auch vier) seitwärts gerichtete Ausblasrohre auf. Die seitlichen Ausblasrohre sind dabei typischerweise symmetrisch angeordnet, um eine beidseitig symmetrische Ausbringung zu ermöglichen. Die Ausblasrohre definieren somit jeweils eine Ausblasrichtung gegenüber der Bodenebene. Die Ausblasrichtung des mittleren Ausblasrohrs schließt mit der Bodenebene typischerweise einen Ausblaswinkel von 90° ein, die seitlichen Ausblasrohre typischerweise einen Winkel zwischen 0 und 90 °. Diese Ausblaswinkel der seitlichen Ausblasrohre definieren die ballistische Flugbahn der Ausbringeinheiten. Zwei symmetrisch angeordnete seitliche Ausblasrohre haben dabei typischerweise einen betragsgleichen aber vorzeichenverkehrten Ausblaswinkel.

In diesem Zusammenhang sei explizit auf die EP 2820950 A1 der Anmelderin verwiesen, in der ein derartiges Ausbringgerät näher beschrieben wird.

Bei dieser Art der biologischen Schädlingsbekämpfung mit Hilfe von Nützlingsorganismen werden pro Hektar etwa 200 Ausbringeinheiten mit einem Gewicht von jeweils etwa 1 g ausgebracht. Das Ausbringgewicht pro Hektar (Gewicht der benötigten Ausbringeinheiten pro Hektar) beträgt demnach etwa 200 g, was im Vergleich zu konventionellen Verfahren der Schädlingsbekämpfung mit einem typischen Ausbringgewicht von 2 bis 5 t pro Hektar extrem niedrig ist. An ein Stelzenfahrzeug, das zur biologischen Schädlingsbekämpfung mit Hilfe von Nützlingsorganismen eingesetzt wird, werden demnach deutlich geringere Anforderungen bezüglich der Nutzlast gestellt, verglichen mit konventioneller Schädlingsbekämpfung.

Wenngleich die an selbstfahrenden zweispurigen Stelzenfahrzeuge gestellten Anforderungen im Detail von Anwendungsfall zu Anwendungsfall variieren, so gilt doch generell, dass das Stelzenfahrzeug (trotz des vergleichsweise hohen Schwerpunkts) eine hohe, das sichere Befahren auch von unebenem bzw. geneigtem Gelände erlaubende Kippstabilität aufweisen, wendig sein, über eine hinreichende, beispielsweise auch für das Befahren von erheblichen Steigungen ermöglichende effektive Antriebsleistung verfügen und einen möglichst geringen Bodendruck verursachen sollte, und das bei möglichst geringen Kosten für den jeweiligen Einsatz. Ersichtlich stehen allerdings bereits einige dieser Zielsetzungen in einem Zielkonflikt zueinander, was es schwer macht, ein optimales Stelzenfahrzeug der hier in Rede stehenden Art bereitzustellen.

Für den praktischen Einsatz wichtige Aspekte mit Auswirkungen auf die Effizienz und den Nutzen betreffen dabei aber nicht nur den Aufbau des Stelzenfahrzeugs selbst. Von wesentlichem Einfluss auf den wirtschaftlichen Einsatz von Stelzenfahrzeugen ist auch deren Transport zum Einsatzort bzw. zwischen zwei Einsatzorten.

Die leichte und schneller Transportierbarkeit eines Stelzenfahrzeugs ist dabei besonders wichtig, wenn dieses zur biologischen Schädlingsbekämpfung mit Hilfe von Nützlingsorganismen verwendet wird. Denn die biologische Schädlingsbekämpfung ist nur dann effektiv, wenn die Ausbringung während eines exakt bestimmten, witterungsabhängigen kurzen Zeitfensters erfolgt. Da die Ausbringung der Nützlingsorganismen typischerweise durch überregional tätige Lohnunternehmen erfolgt, ist vor diesem Hintergrund der schnelle Transport des Stelzenfahrzeugs zum Einsatzort von entscheidender Bedeutung. Daher ist ein solcher Überführungs-Transport günstigenfalls auf einem Anhänger möglich.

Um den Transport eines Stelzenfahrzeugs zu erleichtern ist es hilfreich, wenn die Spurweite und/oder die Bodenfreiheit des Stelzenfahrzeugs für den Transport verringert werden kann. Man spricht in diesem Zusammenhang auch von der Überführung des Stelzenfahrzeugs von einem Betriebsmodus mit großer Spurweite und/oder großer Bodenfreiheit in einen Transportmodus mit geringerer Spurweite und/oder geringerer Bodenfreiheit.

Ein Stelzenfahrzeug bei dem die Bodenfreiheit und die Spurweite zur Erleichterung des Transports verringert werden kann, ist beispielsweise aus der EP 3283357 B1 sowie der DE 10 2016 112 292 A1 der Anmelderin bekannt. Um das Stelzenfahrzeug vom Betriebsmodus (mit hoher Bodenfreiheit und großer Spurweite) in den Transportmodus (mit geringerer Bodenfreiheit und Spurweite) zu überführen, wird das Stelzenfahrzeug mittels einer auf einem Anhänger angebrachten Hubvorrichtung angehoben und anschließend werden die Radträgereinheiten demontiert bzw. hinsichtlich ihrer Konfiguration verändert.

Im Lichte des vorstehend dargelegten Standes der Technik liegt der vorliegenden Erfindung die Aufgabe zugrunde, ein Stelzenfahrzeug der eingangs genannten Art bereitzustellen, das sich im Hinblick auf diverse übliche Anwendungen durch eine besonders hohe Praxistauglichkeit auszeichnet, insbesondere im Hinblick auf eine möglichst schnelle und einfache Überführung des Fahrzeugs von einem Betriebsmodus in einen Transportmodus. Dabei soll sich das bereitzustellende Stelzenfahrzeug insbesondere für den besonders wirtschaftlichen Einsatz im Bereich der biologischen Schädlingsbekämpfung auf landwirtschaftlichen Kulturen eignen.

Gelöst wird diese Aufgabe durch das selbstfahrende zweispurige Stelzenfahrzeug gemäß Anspruch 1. Das selbstfahrende zweispurige Stelzenfahrzeug, insbesondere für land- und forstwirtschaftliche Anwendungen, umfasst eine Basisstruktur und vier Radträgereinheiten, die paarweise an zwei gegenüberliegenden Längsseiten der Basisstruktur angeordnet sind. Dabei sind die Radträgereinheiten jeweils über eine Parallellenkeranordnung schwenkbar gegenüber der Basisstruktur gelagert und mittels eines Radträgeraktuators in eine ausgefahrene Position sowie in eine eingefahrene Position schwenkbar. Beim synchronen Schwenken aller Radträgereinheiten von der eingefahrenen Position in die ausgefahrene Position ändert sich gleichzeitig die Spurweite und die Bodenfreiheit des Stelzenfahrzeugs.

Auf diese Weise wird ein Stelzenfahrzeug bereitgestellt, welches sich durch eine einfache und leichte Konstruktion auszeichnet. Mit nur einem (Radträger)Aktuator und einer Parallellenkeranordnung pro Radträgereinheit kann gleichzeitig die Spurweite und die Bodenfreiheit des Stelzenfahrzeugs kontinuierlich verändert werden.

An den Radträgereinheiten ist dabei typischerweise jeweils ein Rad drehbar gelagert. Jedes Rad definiert dabei eine Radebene, die einen Radebenenwinkel (Sturz) zu einer im Aufstandspunkt des Rads errichteten Senkrechten einschließt, die quer zur Fahrzeuglängsachse steht. Die Parallellenkeranordnung ist jeweils als eine Parallelogrammführung ausgeführt, sodass die Radebenenwinkel (Sturz) während des Schwenkens der Radträgereinheiten von der eingefahrenen Position in die ausgefahrene Position jeweils gleichbleiben.

Im Vergleich zu typischen Stelzenfahrzeugen mit komplexen und schweren Teleskopstelzenkonstruktionen ermöglicht die Erfindung die Realisierung eines Stelzenfahrzeugs mit einem außergewöhnlich geringen Fahrzeuggewicht. Durch das geringe Fahrzeuggewicht verursacht das Stelzenfahrzeug im Betrieb in vorteilhafter Weise nur einen geringen Bodendruck und weist nur einen geringen Energiebedarf auf.

Darüber hinaus verbessert das geringe Fahrzeuggewicht auch die Transportierbarkeit des Stelzenfahrzeugs. Ein erfindungsgemäßes Stelzenfahrzeug kann (im Gegensatz zum typischen Stelzenfahrzeug) auf einem herkömmlichen KFZ-Anhänger transportiert werden, was sich vorteilhaft auf die Transportgeschwindigkeit und die Verfügbarkeit geeigneter Anhänger auswirkt.

Weiterhin profitiert die Transportierbarkeit des Stelzenfahrzeugs von dem Umstand, dass das erfindungsgemäße Stelzenfahrzeug schnell und einfach vom Betriebsmodus in den Transportmodus und umgekehrt überführt werden kann. Hierzu werden bei langsamer Fahrt synchron die Radträgeraktuatoren betätigt, bis die gewünschte Spurweite und Bodenfreiheit erreicht ist. Dadurch, dass dies bei langsamer Fahrt geschieht, wird verhindert, dass sich während der Spurweitenveränderung allzu große axiale Kräfte aufbauen und in schädlicher Weise auf die Radträgereinheiten wirken.

Unter Bodenfreiheit ist vorliegend der Abstand des niedrigsten Punktes der Basisstruktur zum Boden zu verstehen, unter Spurweite, der geringste Abstand zwischen zwei an gegenüberliegenden Längsseiten der Basisstruktur angebrachten Radträgereinheiten.

Gemäß einer ersten bevorzugten Ausgestaltung der Erfindung ist die Bodenfreiheit des Stelzenfahrzeugs in der eingefahrenen Position der Radträgereinheiten geringer als die Bodenfreiheit des Stelzenfahrzeugs in der ausgefahrenen Position der Radträgereinheiten. Dabei kann optional die Bodenfreiheit in der ausgefahrenen Position der Radträgereinheiten mindestens 150 cm, bevorzugt mindestens 180 cm, betragen und die Bodenfreiheit in der eingefahrenen Position der Radträgereinheiten höchstens 40 cm, bevorzugt höchstens 20 cm, betragen.

Auf diese Weise kann erreicht werden, dass die Bodenfreiheit des Stelzenfahrzeugs in der ausgefahrenen Position der Radträgereinheiten ausreichend hoch ist, um typische land-, garten- und forstwirtschaftliche Kulturen mit in Reihen angebauten Pflanzen (begrenzter Wuchshöhe) zu befahren, ohne dabei die Pflanzen zu beschädigen.

Erfindungsgemäß ist vorgesehen, dass die Parallellenkeranordnungen jeweils zwei sich zwischen einer der Radträgereinheiten und der Basisstruktur erstreckende Parallellenker umfassen und die Parallellenker beim Verschwenken von der eingefahrenen Position in die ausgefahrene Position um einen Schwenkwinkel von mindestens 120°, insbesondere mindestens 140°, verschwenkt werden.

Diese (großen) Schwenkwinkel der Parallellenker ermöglichen die kontinuierliche Variation der Spurweite und der Bodenfreiheit über einen weiten Bereich. Vorteilhaft ist ebenfalls, dass in der eingefahrenen Position der Radträgereinheiten (also im Transportmodus des Stelzenfahrzeugs) eine kleine Spurweite mit einer kleinen Bodenfreiheit einhergeht. Die Abmessungen des Stelzenfahrzeugs im Transportmodus sind demnach relativ kompakt, was der Transportierbarkeit zugutekommt.

Gemäß einer bevorzugten Ausgestaltung der Erfindung weist die Basisstruktur einen vorderen Teil und einen hinteren Teil auf, an denen jeweils zwei der vier Radträgereinheiten an gegenüberliegenden Längsseiten der Basisstruktur angeordnet sind, wobei zwischen dem vorderen Teil der Basisstruktur und dem hinteren Teil der Basisstruktur eine ein Gelenk umfassende Knicklenkvorrichtung angeordnet ist.

Das Stelzenfahrzeug wird somit gelenkt, indem der vordere Teil der Basisstruktur (Vorderwagen) gegenüber dem hinteren Teil der Basisstruktur (Hinterwagen) horizontal (also entlang einer vertikalen Achse) verschwenkt wird. Im Vergleich zur (bei Stelzenfahrzeugen) sonst üblichen Achsschenkellenkung (auch Radträgerlenkung genannt) ermöglicht die Knicklenkung eine deutlich einfachere Konstruktion der Radträgereinheiten, was sich in vorteilhafterweise auf das Fahrzeuggewicht, die Fahrzeugkomplexität und die Herstellungs- und Wartungskosten auswirkt.

In besonders bevorzugter Weise ist dabei vorgesehen, dass der vordere Teil der Basisstruktur gegenüber dem hinteren Teil der Basisstruktur in Längsrichtung der Basisstruktur verdrehbar (verwindbar) ist.

Somit kann auch beim Befahren von unebenem Gelände erreicht werden, dass aller Räder kontinuierlich Bodenkontakt haben, was der Stabilität des Stelzenfahrzeugs zugutekommt.

Bevorzugt sind die Radträgeraktuatoren jeweils als linearer Hydraulikaktuator oder als mechanischer Linearaktuator ausgeführt. Auf diese Weise kann erreicht werden, dass die einzelnen Radträgereinheiten kontinuierlich zwischen der eingefahrenen Position und der ausgefahrenen Position verschwenkt werden können.

Dabei können die Radträgereinheiten in ihrer ausgefahrenen Position mechanisch arretiert sein, um den Radträgeraktuator zu entlasten. Anstatt durch mechanische Arretierung können Hydraulikaktuatoren auch durch hydraulische Sperrung in einer gewünschten Position arretiert werden. Dabei kann zusätzlich ein hydraulisches Federspeichervolumen vorgesehen sein, das Stöße auf die zugehörige Radträgereinheit elastisch abfängt und somit eine hydraulische Federung ermöglicht.

Als mechanische Linearaktuatoren kommen insbesondere elektromotorisch oder manuell angetriebene Spindelaktuatoren in Frage.

Gemäß einer weiteren bevorzugten Ausgestaltung der Erfindung umfassen die Parallellenkeranordnungen jeweils zwei sich zwischen einer der Radträgereinheiten und der Basisstruktur erstreckende Parallellenker, wobei mindestens einer der Parallellenker als Trapezlenker ausgeführt ist und insbesondere zwei schräg zur Längsachse der Basisstruktur verlaufende Trapezstreben aufweist.

Auf diese Weise können in Fahrzeuglängsrichtung auf die Radträgereinheiten einwirkende Kräfte besonders gut von der Parallellenkeranordnung aufgenommen werden. Dies kommt der Steifigkeit und der Stabilität des Stelzenfahrzeugs zugute.

Das Stelzenfahrzeug kann weiterhin ein Ausbringgerät zur Ausbringung von kugelförmigen, zur biologischen Schädlingsbekämpfung geeignete Nützlingsorganismen enthaltenden Ausbringeinheiten aufweisen, wobei das Ausbringgerät mehrere Ausblasrohre für die auszubringenden Ausbringeinheiten aufweist.

Gerade in der Kombination eines erfindungsgemäßen Stelzenfahrzeugs mit einem derartigen Ausbringungsgerät für die biologische Schädlingsbekämpfung entfaltet die erfinderische Idee ihr volles Potential. Denn durch das eingangs erwähnte extrem geringe Ausbringgewicht pro Hektar, kann bei der biologischen Schädlingsbekämpfung ein Ausbringfahrzeug mit sehr geringer Nutzlast (und damit auch geringem Fahrzeuggewicht) eingesetzt werden. Somit können auch mit leichten Ausbringfahrzeugen sehr große Flächen effizient in einem Zug behandelt werden, also ohne zeitraubende Zwischenstopps zum Wiederauffüllen des auszubringenden Materials.

In vorteilhafter Weise kann gemäß einer weiteren vorteilhaften Ausgestaltung der Erfindung an den Radträgereinheiten jeweils ein Rad drehbar gelagert und mindestens zwei Räder jeweils über einen an der zugehörigen Radträgereinheit angeordneten Radnabenmotor antreibbar sein. Dabei können die Radnabenmotoren insbesondere als hydrostatische Radnabenmotoren ausgebildet sein.

Auf diese Weise lässt sich ein kompakter und einfacher Antrieb des Stelzenfahrzeugs realisieren, der in jeder Schwenkposition der Radträgereinheiten funktionsfähig ist. Es kann besonders vorteilhaft sein, wenn zwei oder vier Räder mittels Radnabenmotoren angetrieben werden. Die benötigte hydraulische Pumpleistung für die hydrostatischen Radnabenmotoren kann beispielsweise mittels eines Verbrennungsmotors (z.B. Dieselmotor) oder eines Elektromotors bereitgestellt werden.

Gemäß einer weiteren vorteilhaften Ausgestaltung der Erfindung weist das Stelzenfahrzeug einen Lagesensor zur Erfassung der Ausrichtung der Basisstruktur und eine mit dem Lagesensor und den Radträgeraktuatoren wirkverbundene Steuervorrichtung auf, wobei die Radträgeraktuatoren individuell von der Steuervorrichtung ansteuerbar sind.

Somit kann die Position jeder Radträgereinheit zwischen ihrer eingefahrenen Position und ihrer ausgefahrenen Position individuell kontinuierlich variiert werden. Man spricht in diesem Zusammenhang auch von einer aktiven, radindividuellen Niveauverstellung. Damit kann erreicht werden, dass auch beim Befahren von unebenem Gelände eine waagrechte Ausrichtung der Basisstruktur und somit des gesamten Stelzenfahrzeugs gewährleistet wird, was der Stabilität des Stelzenfahrzeugs zugutekommt. Bei Fahrten parallel zum Hang sind dabei typischerweise die Radträgereinheiten der hangzugewandten Spur weiter eingefahren als die Radträgereinheiten der hangabgewandten Spur, um die Basisstruktur in einer waagrechten Ausrichtung zu halten.

Dabei kann besonders vorteilhaft vorgesehen sein, dass das Ausbringgerät um die Längsachse der Basisstruktur drehbar gelagert ist.

Auf diese Weise kann erreicht werden, dass auch bei Fahrten parallel zum Hang die Ausbringung der Ausbringeinheiten symmetrisch zu beiden Längsseiten des Stelzenfahrzeugs erfolgt. Hierzu wird das Ausbringgerät derart um die Längsachse der Basisstruktur gedreht, dass die Ausblasrichtung des mittleren Ausblasrohrs (**auch** bei Hangfahrten) senkrecht zur Bodenebene ausgerichtet ist und somit jeweils zwei seitliche Ausblasrohre (**auch** bei Hangfahrten) einen betragsgleichen aber vorzeichenverkehrten Ausblaswinkel gegenüber der Hangebene (Bodenebene) aufweisen. Dabei ist ersichtlich, dass diese Verdrehbarkeit des Ausbringgeräts um die Längsachse der Basisstruktur auch für andersartige Ausbringgeräte, wie z.B. Wurfteller oder Spritzvorrichtungen, vorteilhaft sein kann.

Alternativ kann auch vorgesehen sein, dass nicht das gesamte Ausbringgerät drehbar um die Längsachse der Basisstruktur gelagert ist, sondern lediglich die Ausblaswinkel der Ausblasrohre gegenüber der Bodenebene verstellbar sind, um auch in Hanglagen zu ermöglichen, dass die Ausbringeinheiten symmetrisch zu beiden Längsseiten des Stelzenfahrzeugs ausgebracht werden.

Gemäß einer weiteren vorteilhaften Ausführungsform des erfindungsgemäßen Stelzenfahrzeugs ist vorgesehen, dass
- die Parallellenkeranordnungen jeweils zwei sich zwischen einer der Radträgereinheiten und der Basisstruktur erstreckende Parallellenker umfassen,
- mindestens einer der Parallellenker jeder Parallellenkeranordnung einen Hebelfortsatz aufweist, der mit dem zugehörigen Parallellenker (insbesondere mit dem Abschnitt des zugehörigen Parallellenkers, der sich zwischen der zugehörigen Radträgereinheit und der Basisstruktur erstreckt) einen Hebelwinkel, insbesondere einen Hebelwinkel von 70°, einschließt, und
- die Radträgeraktuatoren jeweils an der Basisstruktur (2) und einem der Hebelfortsätze (14) drehbar gelagert sind.

Auf diese Weise kann ein Stelzenfahrzeugs bereitgestellt werden, das besonders große Schwenkwinkel bei einer gleichzeitig kompakten Konstruktion ermöglicht.

Besonders bevorzugt erstrecken sich dabei die Radträgeraktuatoren in einem unteren Bereich der Basisstruktur und sind die Radträgeraktuatoren in einer liegenden Einbaulage angeordnet.

Nachfolgend werden fünf Ausführungsbeispiele der Erfindung anhand der Zeichnung näher erläutert. Dabei zeigt
- Fig. 1: ein erstes Ausführungsbeispiel eines Stelzenfahrzeugs, bei dem alle vier Radträgereinheiten in die ausgefahrene Position geschwenkt sind,
- Fig. 2: das Stelzenfahrzeug gemäß Fig. 1, bei dem alle vier Radträgereinheiten in die eingefahrene Position geschwenkt sind,
- Fig. 3: ein zweites Ausführungsbeispiel eines Stelzenfahrzeugs, bei dem alle vier Radträgereinheiten in die eingefahrene Position geschwenkt sind und das sich auf einem Transportanhänger befindet,
- Fig. 4 bis 7: jeweils eine schematische Vorderansicht eines dritten Ausführungsbeispiels eines Stelzenfahrzeugs, wobei sich die Radträgereinheiten in der ausgefahrenen Position (Fig. 4), in einer Position zwischen der ausgefahrenen Position und der eingefahrenen Position (Figuren 5 und 6) bzw. in der eingefahrenen Position befinden,
- Fig. 8: eine schematische Vorderansicht eines vierten Ausführungsbeispiels eines Stelzenfahrzeugs, wobei sich die Radträgereinheiten einer Spur in einer eingefahrenen Position befinden und sich die der anderen Spur in einer ausgefahrenen Position befinden, und
- Fig. 9: eine schematische Draufsicht eines fünften Ausführungsbeispiels eines Stelzenfahrzeugs.

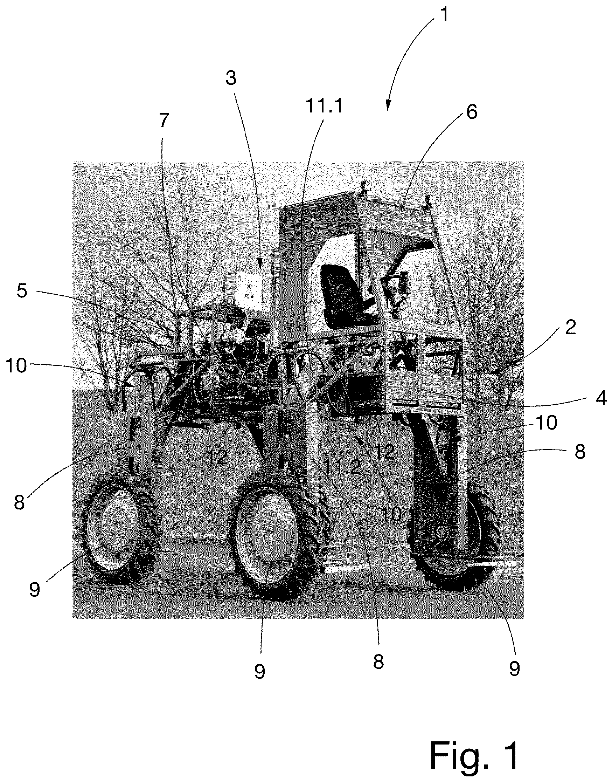

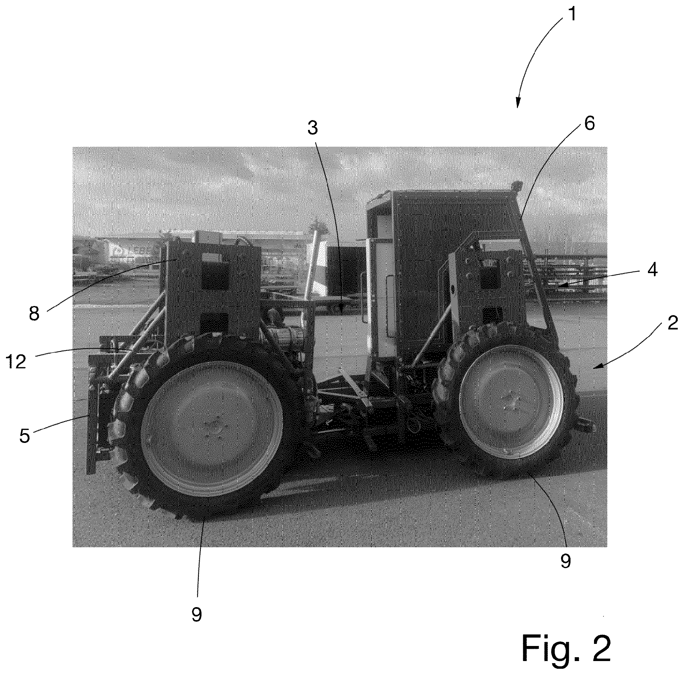

Die Figuren 1 und 2 zeigen ein erstes Ausführungsbeispiel eines erfindungsgemäßen selbstfahrenden zweispurigen Stelzenfahrzeugs 1. Das Stelzenfahrzeug 1 weist eine Basisstruktur 2 auf, die durch eine ein Gelenk umfassende Knicklenkvorrichtung 3 in einen vorderen Teil (Vorderwagen) 4 und einen hinteren Teil (Hinterwagen) 5 unterteilt wird. Der vordere Teil 3 trägt eine Fahrerkabine 6, der hintere Teil 4 trägt ein durch einen Dieselmotor angetriebenes Hydraulikaggregat 7. An der Basisstruktur 2 sind paarweise jeweils an gegenüberliegenden Längsseiten Radträgereinheiten 8 angeordnet, an denen jeweils ein durch einen hydrostatischen Radnabenmotor angetriebenes Rad 9 drehbar gelagert ist. Die Radträgereinheiten 8 sind jeweils als Rahmenkonstruktion ausgeführt und über eine Parallellenkeranordnung 10 schwenkbar gegenüber der Basisstruktur 2 gelagert. Die Parallellenkeranordnungen 10 sind dabei jeweils als zwei sich zwischen einer der Radträgereinheiten 8 und der Basisstruktur 2 erstreckende Parallellenker 11.1, 11.2 ausgeführt, wobei jeweils der radferne Parallellenker 11.1 zwei schräg zur Längsachse der Basisstruktur 2 verlaufende Trapezstreben 12 aufweist und damit als Trapezlenker ausgeführt ist. Die Radträgereinheiten 8 können mittels eines Radträgeraktuators (nicht sichtbar) von einer ausgefahrenen Position in eine eingefahrene Position geschwenkt werden.

Figur 1 zeigt das Stelzenfahrzeug 1 nachdem alle Radträgereinheiten 8 synchron in die ausgefahrene Position geschwenkt wurden. Das Stelzenfahrzeug 1 befindet sich im Betriebsmodus und weist eine hohe Bodenfreiheit auf. In Figur 2 hingegen sind alle Radträgereinheiten in die eingefahrene Position geschwenkt. Das Stelzenfahrzeug 1 befindet sich im Transportmodus und weist eine relativ geringe Bodenfreiheit auf. Durch das gleichzeitige (synchrone) Schwenken der Radträgereinheiten 8 von der eingefahrenen Position in die ausgefahrene Position, ändert sich zugleich die Bodenfreiheit und die Spurweite des Stelzenfahrzeugs.

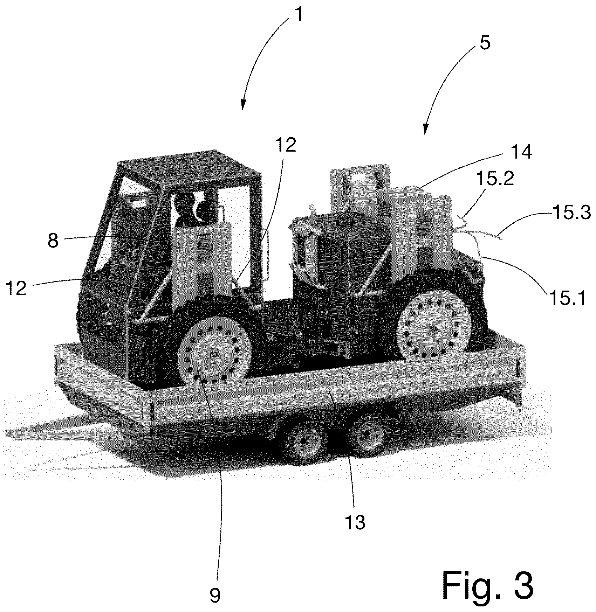

Figur 3 stellt ein zweites Ausführungsbeispiel eines Stelzenfahrzeugs 1 dar, welches sich im Transportmodus (alle Radträgereinheiten 8 sind in den eingefahrenen Modus geschwenkt) auf einem typischen KFZ-Anhänger 13 befindet. Auf dem hinteren Teil der Basisstruktur (Hinterwagen) 5 ist ein Ausbringgerät 14 zur Ausbringung von kugelförmigen, zur biologischen Schädlingsbekämpfung geeignete Nützlingsorganismen enthaltenden Ausbringeinheiten angeordnet. Das Ausbringgerät 14 ist um die Längsachse der Basisstruktur 2 (insbesondere um die Längsachse des hinteren Teils 5 der Basisstruktur 2) drehbar gelagert, um zu ermöglichen, dass dieses (insbesondere bei Hangfahrten) mittels eines Hydraulikaktuators gegenüber dem hinteren Teil 5 der Basisstruktur 2 gedreht werden kann. Ferner umfasst das Ausbringgerät 14 drei Ausblasrohre 15.1, 15.2, 15.3. Das mittige Ausblasrohr 15.1 weist eine in der Längsrichtung des hinteren Teils der Basisstruktur 2 nach unten gerichtete Mündungsöffnung auf. Die beiden seitlichen Ausblasrohre 15.2, 15.3 sind symmetrisch zueinander angeordnet und verlaufen parallel zur Bodenebene (d.h. sie schließen mit der Bodenebene einen Winkel von 0° ein).

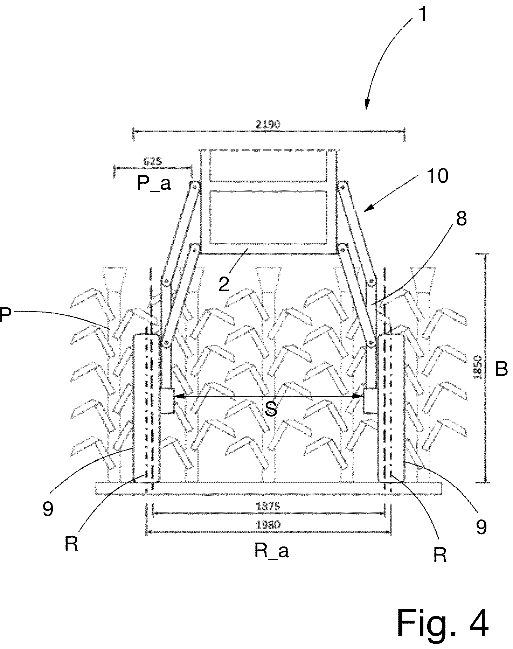

Die schematischen Vorderansichten eines dritten Ausführungsbeispiels eines Stelzenfahrzeugs gemäß den Figuren 4 bis 7 illustrieren verschiedene Betriebsmodi sowie den Transportmodus. Die Figuren 4 bis 6 zeigen dabei jeweils das Stelzenfahrzeug 1 beim Befahren von Feldern mit in Reihen angebauten Pflanzen P, wobei sich der Abstand zwischen den Pflanzenreihen P_a in den einzelnen Figuren unterscheidet.

Gemäß Figur 4 beträgt der Abstand zwischen den Pflanzenreihen P_a einer "Engsaat" 625 mm, die Höhe der Pflanzen etwa 1800 mm. Die Radträgereinheiten 8 sind maximal ausgefahren, der Abstand zwischen den Radebenen R der Räder 9 der beiden Spuren R_a beträgt 1980 mm und die Bodenfreiheit B 1850 mm. Die Spurweite S ist als der geringste Abstand zwischen den zwei an gegenüberliegenden Längsseiten der Basisstruktur 2 angebrachten Radträgereinheiten 8 eingezeichnet. In diesem Betriebsmodus ("Betriebsmodus Engsaat") befinden sich die beiden Spuren des Stelzenfahrzeugs 1 zwischen zwei benachbarten Pflanzenreihen, zwischen den Spuren des Fahrzeugs befinden sich drei Pflanzenreihen. Die in Reihen angebauten Pflanzen P können somit mit dem Stelzenfahrzeug 1 überfahren werden, ohne dass die Pflanzen P durch die Räder 9 (übermäßig) beschädigt werden.

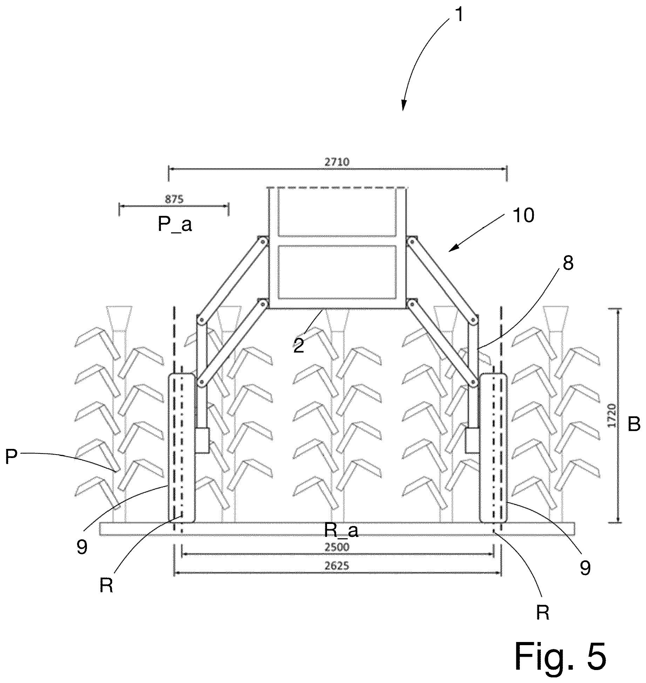

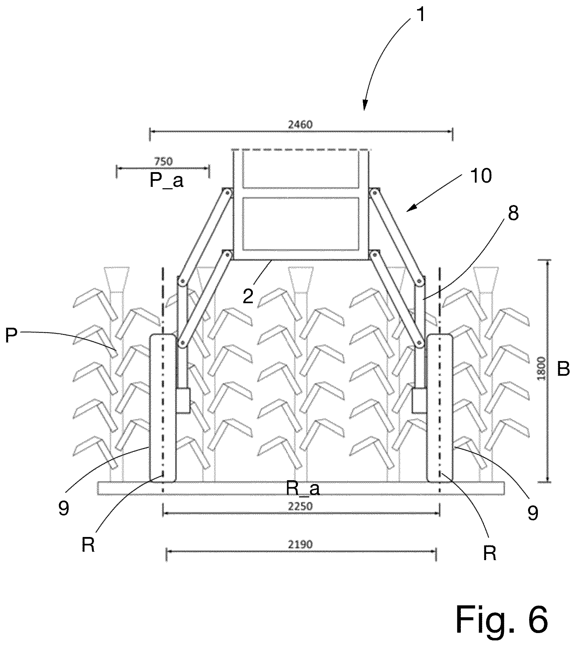

In den Figuren 5 und 6 beträgt der Abstand zwischen den Pflanzenreihen P_a 875 mm ("Weitsaat") bzw. 750 mm ("Normalsaat"). Um zu ermöglichen, dass auch bei diesem Reihenabstand die Pflanzen beim Überfahren des Feldes nicht durch die Räder 9 beschädigt werden, wird die Spurweite des Stelzenfahrzeugs 1 durch Verschwenken der Radträgereinheiten 8 verändert. Hierzu werden (ausgehend vom Betriebsmodus "Engsaat" gemäß Figur 4) die Radträgereinheiten synchron soweit eingefahren, bis der Abstand zwischen den Radebenen R der Räder 9 der beiden Spuren R_a 2500 mm (Fig. 5) bzw. 2250 mm (Fig. 6) beträgt. Das Stelzenfahrzeug wird dann im Betriebsmodus "Weitsaat" (Fig. 5) bis "Normalsaat" (Fig. 6) betrieben. Diese Vergrößerung der Spurweite geht dabei mit einer Verringerung der Bodenfreiheit B auf 1720 mm (Fig. 5) bzw. 1800 mm (Fig. 6) einher.

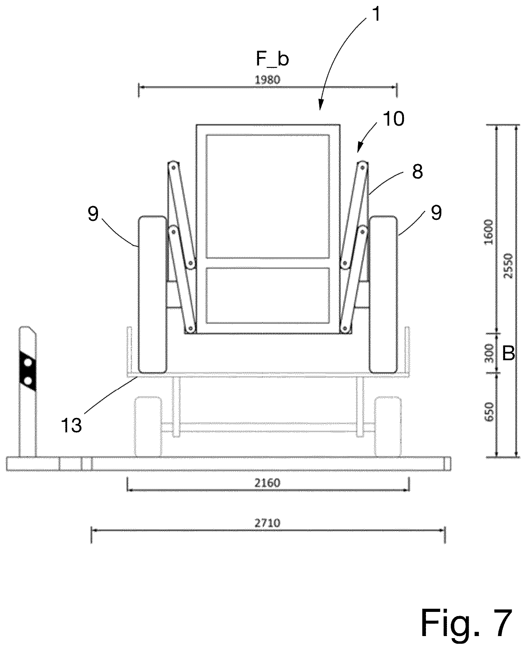

Figur 7 zeigt das Stelzenfahrzeug 1 im Transportmodus mit maximal eingefahrenen Radträgereinheiten 8 (also mit in die eingefahrene Position verschwenkte Radträgereinheiten 8) auf einem typischen KFZ-Anhänger 13. Die Bodenfreiheit B beträgt 300 mm, die Gesamtbreite des Stelzenfahrzeugs (Fahrzeugbreite F_b) lediglich 1980 mm. Diese geringe Fahrzeugbreite F_b ermöglicht den Transport des Stelzenfahrzeugs auf einem typischen KFZ-Anhänger 13 (z.B. des Herstellers Humbauer, Typ HN 304121.

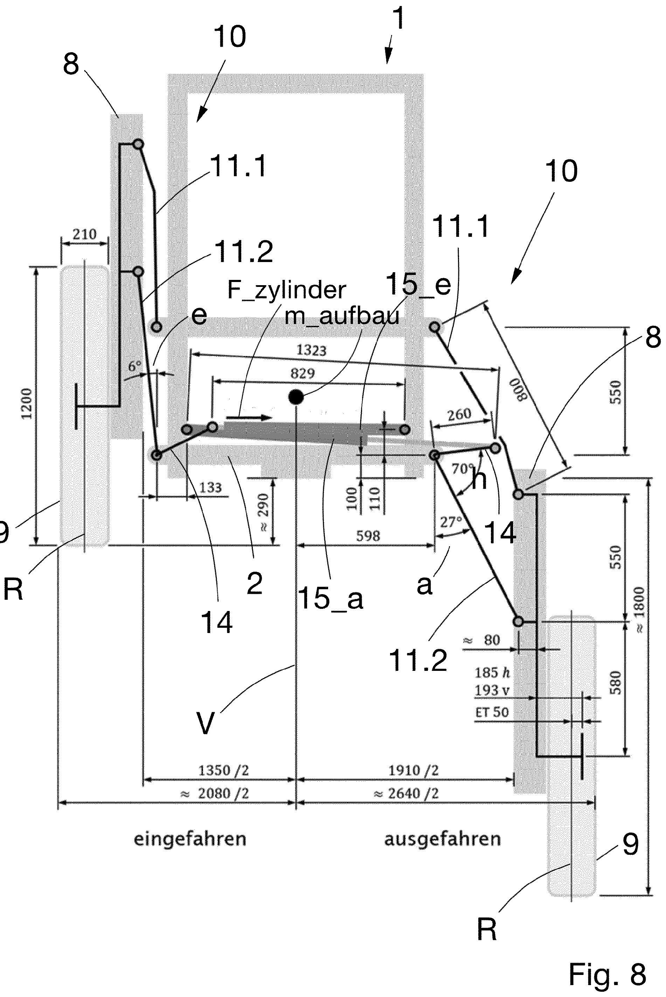

Figur 8 stellt eine schematische Vorderansicht eines vierten Ausführungsbeispiels eines Stelzenfahrzeugs 1 dar, wobei sich die Radträgereinheiten 8 einer Spur in einer eingefahrenen Position (linker Bildbereich) befinden und sich die der anderen Spur in einer ausgefahrenen Position (rechter Bildbereich) befinden. Die Radträgereinheiten 8 sind jeweils über eine zwei Parallellenker 11.1, 11.2 umfassende Parallellenkeranordnung 10 gegenüber dem vorderen Teil der Basisstruktur 2 (Vorderwagen) schwenkbar gelagert. An jeder Radträgereinheit 8 ist ein Rad 9 drehbar gelagert, welches eine Radebene R definiert. Die radnahen Parallellenker 11.2 sind jeweils als gerade Lenker, die radfernen Parallellenker 11.1 als gekröpfte Lenker ausgeführt. Die radnahen Parallellenker 11.2 weisen dabei jeweils einen Hebelfortsatz 14 auf, der mit diesem einen Hebelwinkel h von 70° einschließt. Der Hebelfortsatz 14 schließt demnach mit dem Abschnitt des Parallellenkers 11.2, der sich zwischen der Basisstruktur 2 und der zugehörigen Radträgereinheit 8 erstreckt, einen Hebelwinkel h ein. An den den Parallellenkern 11.2 abgewandten Enden der Hebelfortsätze 14 ist jeweils ein liegender, in einer mehr oder weniger horizontalen Einbaulage verbauter, als linearer Hydraulikaktuator 15_e, 15_a ausgeführter Radträgeraktuator drehbar angebracht, der sich an seiner anderen Seite an der Basisstruktur 2 abstützt und gegenüber dieser drehbar gelagert ist. Die Radträgeraktuatoren sind jeweils an der Basisstruktur 2 und einem der Hebelfortsätze 14 drehbar gelagert. Aus Figur 8 ist ferner ersichtlich, dass die Radträgeraktuatoren jeweils an einem der Hebelfortsätze 14 und an der dem jeweiligen Hebelfortsatz 14 gegenüberliegenden Seite der Basisstruktur 2 drehbar gelagert sind. Die Radträgeraktuatoren erstrecken sich dabei in einem unteren Bereich ("Bodenbereich") der Basisstruktur 2. Die Radträgeraktuatoren sind in einer liegenden Einbaulage angeordnet.

Der zur eingefahrenen Radträgereinheit 8 (linker Bildbereich) zugehörige Hydraulikaktuator 15_e ist vollständig eingefahren, sodass die Radträgereinheit 8 mittels des Hebelfortsatzes 14 sowie der Parallellenker 11.1, 11.2 in die eingefahrene Position geschwenkt ist. Der sich zwischen dem radnahen Parallellenker 11.2 und der Vertikalen V aufgespannte Einfahrwinkel e beträgt 6°. Die Radebene R des Rades 9 der eingefahrenen Radträgereinheit verläuft parallel zur Vertikalen V.

Die im rechten Bildbereich dargestellte Radträgereinheit 8 ist vollständig ausgefahren. Der zugehörige Hydraulikaktuator 15_a ist vollständig ausgefahren, sodass die Radträgereinheit 8 mittels des Hebelfortsatzes 14 sowie der Parallellenker 11.1, 11.2 in die ausgefahrene Position geschwenkt ist. Der Ausfahrwinkel a zwischen dem radnahen Parallellenker und der Vertikalen V beträgt 27°. Der radnahe Parallellenker wird beim Schwenken von der eingefahrenen Position (Einfahrwinkel e 6°) in die ausgefahrene Position (Ausfahrwinkel a 27°) um einen Schwenkwinkel von 147° (= 180° - 6° - 27°) verschwenkt. Die gekröpfte Ausführung der radfernen Parallellenker 11.1 verhindert dabei in der ausgefahrenen Position deren Kollision mit den Hebelfortsätzen 14.

Wie aus der in Figur 8 dargestellten Kinematik ersichtlich, werden dadurch, dass die Radträgeraktuatoren (bzw. die linearen Hydraulikaktuatoren 15_e, 15_a) über abgewinkelte Hebelfortsätze 14 an den Parallellenkern 11.1, 11.2 angreifen und diese verschwenken, besonders große Schwenkwinkel bei einer gleichzeitig kompakten Konstruktion ermöglicht.

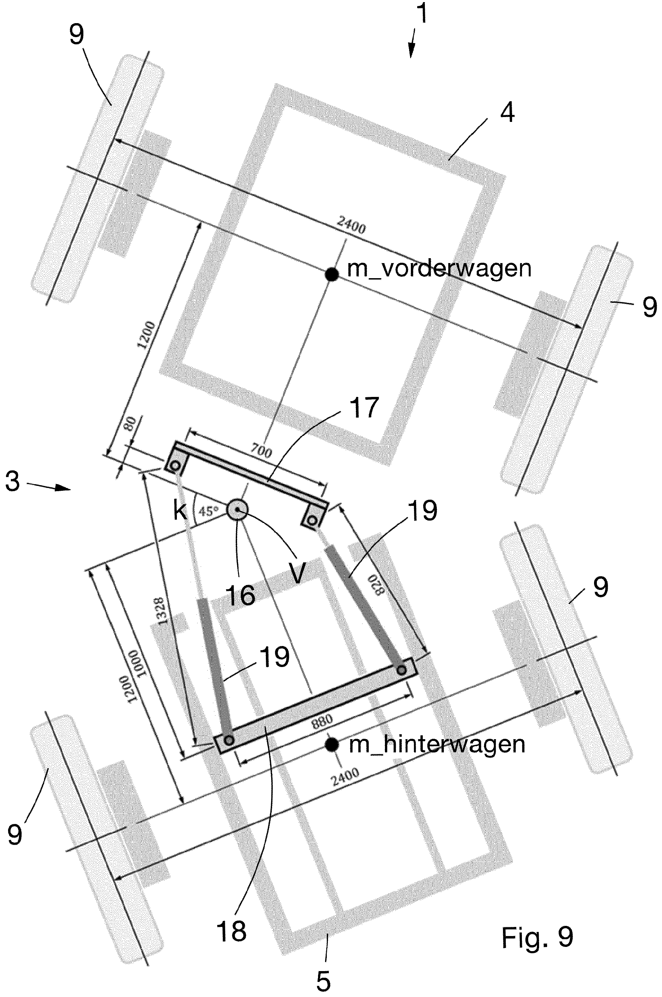

Figur 9 zeigt eine schematische Draufsicht eines fünften Ausführungsbeispiel eines Stelzenfahrzeugs 1 mit besonderem Fokus auf die Ausführung der Knicklenkvorrichtung 3 zwischen dem vorderen Teil (Vorderwagen) 4 der Basisstruktur 2 und dem hinteren Teil (Hinterwagen) 5 der Basisstruktur 2. Die Knicklenkvorrichtung 3 umfasst ein Gelenk 16, sowie eine vordere Basis 17 sowie eine hintere Basis 18. Über das Gelenk 16 sind die vordere Basis 17 und die hintere Basis 18 um die Vertikale V drehbar gegeneinander gelagert.

Die hintere Basis 17 ist ohne Freiheitsgrade fest mit dem Hinterwagen 5 verbunden, die vordere Basis 16 ist mittels einer Pendelanordnung mit einem rotatorischen Freiheitsgrad um die Längsachse drehbar am Vorderwagen 4 gelagert. Auf diese Weise ist der Vorderwagen 4 bis zu einem maximalen Pendelwinkel von +/- 15° gegen den Hinterwagen 5 in Längsrichtung der Basisstruktur 2 verdrehbar (verwindbar), was auch in unebenem Gelände eine kontinuierliche Bodenhaftung aller vier Räder 9 ermöglicht. Alternativ kann die Verwindbarkeit zwischen Vorderwagen 4 und Hinterwagen 5 auch erreicht werden, indem die vordere Basis 17 ohne Freiheitsgrad mit dem Vorderwagen 4 verbunden ist und die hintere Basis 18 mittels einer Pendelanordnung mit einem rotatorischen Freiheitsgrad am Hinterwagen 5 gelagert ist. Denkbar ist ebenso, dass sowohl die vordere Basis als auch die hintere Basis jeweils fest ohne Freiheitsgrad mit dem Vorderwagen bzw. mit dem Hinterwagen verbunden sind und die Verwindbarkeit dadurch ermöglicht wird, dass das Gelenk 16 nicht nur eine Verdrehung um die Vertikale, sondern auch eine Verwindung um die Längsachse des Fahrzeugs ermöglicht.

Mittels der beiden als lineare Hydraulikaktuatoren ausgeführten Lenkaktuatoren 19 kann der Vorderwagen 4 gegenüber dem Hinterwagen 6 um die Vertikale V verschwenkt bzw. verdreht werden. Der maximale Knickwinkel k zwischen dem Vorderwagen und dem Hinterwagen beträgt 45°.

## Patentansprüche

1. Selbstfahrendes zweispuriges Stelzenfahrzeug (1), insbesondere für land- und forstwirtschaftliche Anwendungen, umfassend
- eine Basisstruktur (2) und
- vier Radträgereinheiten (8), die paarweise an zwei gegenüberliegenden Längsseiten der Basisstruktur (2) angeordnet sind
wobei
- die Radträgereinheiten (8) jeweils über eine Parallellenkeranordnung (10) schwenkbar gegenüber der Basisstruktur (2) gelagert und mittels eines Radträgeraktuators in eine ausgefahrene Position sowie in eine eingefahrene Position schwenkbar sind,
- sich beim synchronen Schwenken aller Radträgereinheiten (8) von der eingefahrenen Position in die ausgefahrene Position gleichzeitig die Spurweite (S) und die Bodenfreiheit (B) des Stelzenfahrzeugs ändert,
- die Parallellenkeranordnungen (10) jeweils zwei sich zwischen einer der Radträgereinheiten (8) und der Basisstruktur (2) erstreckende Parallellenker (11.1, 11.2) umfassen **dadurch gekennzeichnet, dass**
- die Parallellenker (11.1, 11.2) beim Verschwenken von der eingefahrenen Position in die ausgefahrene Position um einen Schwenkwinkel von mindestens 120°, insbesondere mindestens 140°, verschwenkt werden.

2. Selbstfahrendes zweispuriges Stelzenfahrzeug (1) nach einem der vorangehenden Ansprüche, wobei
- die Parallellenkeranordnungen (10) jeweils zwei sich zwischen einer der Radträgereinheiten (8) und der Basisstruktur (2) erstreckende Parallellenker (11.1, 11.2) umfassen,
- mindestens einer der Parallellenker (11.1, 11.2) jeder Parallellenkeranordnung (10) einen Hebelfortsatz aufweist, der mit dem zugehörigen Parallellenker, insbesondere mit dem Abschnitt des zugehörigen Parallellenkers, der sich zwischen der zugehörigen Radträgereinheit und der Basisstruktur erstreckt, einen Hebelwinkel (h), insbesondere einen Hebelwinkel (h) von 70°, einschließt, und
- die Radträgeraktuatoren jeweils an der Basisstruktur (2) und einem der Hebelfortsätze (14) drehbar gelagert sind.

3. Selbstfahrendes zweispuriges Stelzenfahrzeug nach Anspruch 2, wobei sich die Radträgeraktuatoren in einem unteren Bereich der Basisstruktur (2) erstrecken und in einer liegenden Einbaulage angeordnet sind.

4. Selbstfahrendes zweispuriges Stelzenfahrzeug (1) nach einem der vorangehenden Ansprüche, wobei die Bodenfreiheit (B) des Stelzenfahrzeugs (1) in der eingefahrenen Position der Radträgereinheiten (8) geringer ist als die Bodenfreiheit (B) des Stelzenfahrzeugs (1) in der ausgefahrenen Position der Radträgereinheiten (8), und optional
- die Bodenfreiheit (B) in der ausgefahrenen Position der Radträgereinheiten (8) mindestens 150 cm, bevorzugt mindestens 180 cm, beträgt und
- die Bodenfreiheit (B) in der eingefahrenen Position der Radträgereinheiten (8) höchstens 40 cm, bevorzugt höchstens 20 cm, beträgt.

5. Selbstfahrendes zweispuriges Stelzenfahrzeug (1) nach einem der vorangehenden Ansprüche, wobei
- die Basisstruktur (2) einen vorderen Teil (4) und einen hinteren Teil (5) aufweist, an denen jeweils zwei der vier Radträgereinheiten (8) an gegenüberliegenden Längsseiten der Basisstruktur (2) angeordnet sind, und
- zwischen dem vorderen Teil (4) der Basisstruktur (2) und dem hinteren Teil (5) der Basisstruktur (2) eine ein Gelenk (16) umfassende Knicklenkvorrichtung (3) angeordnet ist.

6. Selbstfahrendes zweispuriges Stelzenfahrzeug (1) nach Anspruch 5, wobei der vordere Teil (4) der Basisstruktur (2) gegenüber dem hinteren Teil (5) der Basisstruktur (2) in Längsrichtung der Basisstruktur (2) verdrehbar ist.

7. Selbstfahrendes zweispuriges Stelzenfahrzeug (1) nach einem der vorangehenden Ansprüche, wobei die Radträgeraktuatoren jeweils als linearer Hydraulikaktuator (15_e, 15_a) oder als mechanischer Linearaktuator ausgeführt sind.

8. Selbstfahrendes zweispuriges Stelzenfahrzeug (1) nach einem der vorangehenden Ansprüche, wobei
- die Parallellenkeranordnungen (10) jeweils zwei sich zwischen einer der Radträgereinheiten (8) und der Basisstruktur (2) erstreckende Parallellenker (11.1, 11.2) umfasst, und
- mindestens einer der Parallellenker (11.1) als Trapezlenker ausgeführt ist und insbesondere zwei schräg zur Längsachse der Basisstruktur verlaufende Trapezstreben (12) aufweist.

9. Selbstfahrendes zweispuriges Stelzenfahrzeug (1) nach einem der vorangehenden Ansprüche, wobei
- das Stelzenfahrzeug (1) ein Ausbringgerät (14) zur Ausbringung von kugelförmigen, zur biologischen Schädlingsbekämpfung geeignete Nützlingsorganismen enthaltenden Ausbringeinheiten aufweist, und
- das Ausbringgerät (14) mehrere Ausblasrohre (15.1, 15.2, 15.3) für die auszubringenden Ausbringeinheiten aufweist.

10. Selbstfahrendes zweispuriges Stelzenfahrzeug (1) nach einem der vorangehenden Ansprüche, wobei
- an den Radträgereinheiten (8) jeweils ein Rad (9) drehbar gelagert ist und mindestens zwei Räder (9) jeweils über einen an der zugehörigen Radträgereinheit (8) angeordneten Radnabenmotor antreibbar sind und
- die Radnabenmotoren insbesondere als hydrostatische Radnabenmotoren ausgebildet sind.

11. Selbstfahrendes zweispuriges Stelzenfahrzeug (1) nach einem der vorangehenden Ansprüche, wobei
- das Stelzenfahrzeug (1) einen Lagesensor zur Erfassung der Ausrichtung der Basisstruktur (2) und eine mit dem Lagesensor und den Radträgeraktuatoren wirkverbundene Steuervorrichtung aufweist, und
- die Radträgeraktuatoren individuell von der Steuervorrichtung ansteuerbar sind.

12. Selbstfahrendes zweispuriges Stelzenfahrzeug (1) nach Anspruch 9, wobei das Ausbringgerät (14) um die Längsachse der Basisstruktur (2) drehbar gelagert ist.

## Claims

1. Self-propelled two-track stilt vehicle (1), in particular for agricultural and forestry applications, comprising
- a basic structure (2) and
- four wheel carrier units (8) in pairs on two opposite longitudinal sides of the base structure (2)
whereby
- the wheel carrier units (8) are each pivotably mounted relative to the base structure (2) via a parallel link arrangement (10) and can be pivoted into an extended position and into a retracted position by means of a wheel carrier actuator,
- the track width (S) and the ground clearance (B) of the stilt vehicle change simultaneously when all wheel carrier units (8) swivel synchronously from the retracted position to the extended position,
- the parallel link arrangements (10) each comprise two parallel links (11.1, 11.2) extending between one of the wheel carrier units (8) and the base structure (2),
**characterized in**
- the parallel links (11.1, 11.2) are pivoted by a pivoting angle of at least 120°, in particular at least 140°, when pivoting from the retracted position to the extended position.

2. Self-propelled two-track stilt vehicle (1) according to one of the preceding claims, wherein
- the parallel link arrangements (10) each comprise two parallel links (11.1, 11.2) extending between one of the wheel carrier units (8) and the base structure (2),
- at least one of the parallel links (11.1, 11.2) of each parallel link arrangement (10) has a lever extension which includes a lever angle (h), in particular a lever angle (h) of 70°, with the associated parallel link, in particular with the section of the associated parallel link which extends between the associated wheel carrier unit and the base structure, and
- the wheel carrier actuators are each rotatably mounted on the base structure (2) and one of the lever extensions (14).

3. Self-propelled two-track stilt vehicle according to claim 2, wherein the wheel carrier actuators extend in a lower region of the base structure (2) and are arranged in a horizontal installation position.

4. Self-propelled two-track stilt vehicle (1) according to one of the preceding claims, wherein the ground clearance (B) of the stilt vehicle (1) in the retracted position of the wheel carrier units (8) is lower than the ground clearance (B) of the stilt vehicle (1) in the extended position of the wheel carrier units (8), and
- the ground clearance (B) in the extended position of the wheel carrier units (8) is at least 150 cm, preferably at least 180 cm, and
- the ground clearance (B) in the retracted position of the wheel carrier units (8) is at most 40 cm, preferably at most 20 cm.

5. Self-propelled two-track stilt vehicle (1) according to one of the preceding claims, wherein
- the base structure (2) has a front part (4) and a rear part (5), on each of which two of the four wheel carrier units (8) are arranged on opposite longitudinal sides of the base structure (2), and
- an articulated steering device (3) comprising a joint (16) is arranged between the front part (4) of the base structure (2) and the rear part (5) of the base structure (2).

6. A self-propelled two-track stilt vehicle (1) according to claim 5, wherein the front part (4) of the base structure (2) is rotatable relative to the rear part (5) of the base structure (2) in the longitudinal direction of the base structure (2).

7. Self-propelled two-track stilt vehicle (1) according to one of the preceding claims, wherein the wheel carrier actuators are each designed as a linear hydraulic actuator (15_e, 15_a) or as a mechanical linear actuator.

8. Self-propelled two-track stilt vehicle (1) according to one of the preceding claims, wherein
- the parallel link arrangements (10) each comprise two parallel links (11.1, 11.2) extending between one of the wheel carrier units (8) and the base structure (2), and
- at least one of the parallel links (11.1) is designed as a trapezoidal link and, in particular, has two trapezoidal struts (12) extending at an angle to the longitudinal axis of the base structure.

9. Self-propelled two-track stilt vehicle (1) according to one of the preceding claims, wherein
- the stilt vehicle (1) has a spreading device (14) for spreading spherical spreading units containing beneficial organisms suitable for biological pest control, and
- the spreading device (14) has several discharge pipes (15.1, 15.2, 15.3) for the spreading units to be spread.

10. Self-propelled two-track stilt vehicle (1) according to one of the preceding claims, wherein
- a wheel (9) is rotatably mounted on each of the wheel carrier units (8) and at least two wheels (9) can each be driven via a wheel hub motor arranged on the associated wheel carrier unit (8), and
- the wheel hub motors are designed in particular as hydrostatic wheel hub motors.

11. Self-propelled two-track stilt vehicle (1) according to one of the preceding claims, wherein
- the stilt vehicle (1) has a position sensor for detecting the orientation of the base structure (2) and a control device operatively connected to the position sensor and the wheel support actuators, and
- the wheel carrier actuators can be individually controlled by the control device.

12. The self-propelled two-track stilt vehicle (1) according to claim 9, wherein the spreading device (14) is mounted rotatably about the longitudinal axis of the base structure (2).

## Revendications

1. Véhicule à portique à deux voies à conduite autonome (1), en particulier pour des applications agricoles et sylvicoles, comprenant
- une structure de base (2), et
- quatre unités de support de roues (8), qui sont disposées par paires sur deux côtés longitudinaux opposés de la structure de base (2),
sachant que
- les unités de support de roues (8) sont logées respectivement sur un agencement de bras parallèles (10) pouvant pivoter par rapport à la structure de base (2) et peuvent pivoter au moyen d'un actionneur de support de roues dans une position sortie ainsi que dans une position rentrée,
- l'écartement des roues (S) et la garde au sol (B) du véhicule à portique sont simultanément modifiés lors du pivotement synchrone de toutes les unités de support de roues (8) de la position rentrée à la position sortie,
- les agencements de bras parallèles (10) comprennent respectivement deux bras parallèles (11.1, 11.2) s'étendant entre une des unités de support de roues (8) et la structure de base (2),
**caractérisé en ce que**
- les bras parallèles (11.1, 11.2) sont pivotés d'un angle de pivotement d'au moins 120°, en particulier d'au moins 140° lors du pivotement de la position rentrée à la position sortie.

2. Véhicule à portique à deux voies à conduite autonome (1) selon la revendication précédente, sachant que
- les agencements de bras parallèles (10) comprennent respectivement deux bras parallèles (11.1, 11.2) s'étendant entre une des unités de support de roues (8) et la structure de base (2),
- au moins un des bras parallèles (11.1, 11.2) de chaque agencement de bras parallèles (10) comporte un prolongement de levier, qui forme un angle de levier (h), en particulier un angle de levier (h) de 70° avec le bras parallèle correspondant, en particulier avec la section du bras parallèle correspondant, qui s'étend entre l'unité de support de roues correspondante et la structure de base, et
- les actionneurs de support de roues sont respectivement logés pouvant tourner sur la structure de base (2) et un des prolongements de levier (14)

3. Véhicule à portique à deux voies à conduite autonome selon la revendication 2, sachant que les actionneurs de support de roues s'étendent dans une zone inférieure de la structure de base (2) et sont disposés dans une position de montage horizontale.

4. Véhicule à portique à deux voies à conduite autonome (1) selon l'une quelconque des revendications précédentes, sachant que la garde au sol (B) du véhicule à portique (1) dans la position rentrée des unités de support de roues (8) est plus faible que la garde au sol (B) du véhicule à portique (1) dans la position sortie des unités de support de roues (8), et, en option
- la garde au sol (B) dans la position sortie des unités de support de roues (8) est au moins de 150 cm, de préférence au moins 180 cm, et
- la garde au sol (B) dans la position rentrée des unités de support de roues (8) est au maximum de 40 cm, de préférence au maximum de 20 cm.

5. Véhicule à portique à deux voies à conduite autonome (1) selon l'une quelconque des revendications précédentes, sachant que
- la structure de base (2) comporte une partie avant (4) et une partie arrière (5) sur lesquelles sont respectivement disposées deux des quatre unités de support de roues (8) sur les côtés longitudinaux opposés de la structure de base (2), et
- un dispositif de direction articulée (3) comprenant une articulation (16) est disposé entre la partie avant (4) de la structure de base (2) et la partie arrière (5) de la structure de base (2).

6. Véhicule à portique à deux voies à conduite autonome (1) selon la revendication 5, sachant que la partie avant (4) de la structure de base (2) peut être tournée par rapport à la partie arrière (5) de la structure de base (2) dans le sens longitudinal de la structure de base (2).

7. Véhicule à portique à deux voies à conduite autonome (1) selon une quelconque des revendications précédentes, sachant que les actionneurs de support de roues sont respectivement exécutés sous la forme d'actionneurs hydrauliques linéaires (15_e, 15 a) ou sous la forme d'actionneurs linéaires mécaniques.

8. Véhicule à portique à deux voies à conduite autonome (1) selon l'une quelconque des revendications précédentes, sachant que
- les agencements de bras parallèles (10) comprennent respectivement deux bras parallèles (11., 11.2) s'étendant entre une des unités de support de roues (8) et la structure de base (2), et
- au moins un des bras parallèles (11.1) est exécuté sous la forme de bras trapézoïdal et comporte en particulier deux montants trapézoïdaux (12) passant en diagonale à l'axe longitudinal de la structure de base.

9. Véhicule à portique à deux voies à conduite autonome (1) selon l'une quelconque des revendications précédentes, sachant que
- le véhicule à portique (1) comporte un appareil d'épandage (14) pour l'épandage d'unités d'épandage sphériques, contenant des organismes bénéfiques adaptés à la lutte biologique contre les parasites, et
- l'appareil d'épandage (14) comporte plusieurs tubes de soufflage (15.1, 15.2, 15.3) pour les unités d'épandage à épandre.

10. Véhicule à portique à deux voies à conduite autonome (1) selon l'une quelconque des revendications précédentes, sachant qu'
- une roue (9) est respectivement logée pouvant tourner sur les unités de support de roues (8) et qu'au moins deux roues (9) peuvent être respectivement entraînées par le biais d'un moteur sur moyeu de roue disposé sur l'unité de support de roues (8) correspondante, et
- les moteurs sur moyeu de roue sont constitués en particulier sous la forme de moteurs sur moyeu de roue hydrostatiques.

11. Véhicule à portique à deux voies à conduite autonome (1) selon l'une quelconque des revendications précédentes, sachant que
- le véhicule à portique (1) comporte un capteur de position pour saisir l'orientation de la structure de base (2) et un dispositif de commande en liaison fonctionnelle avec le capteur de position et les actionneurs de support de roues, et
- les actionneurs de support de roue peuvent être commandés de façon individuelle par le dispositif de commande.

12. Véhicule à portique à deux voies à conduite autonome (1) selon la revendication 9, sachant que l'appareil d'épandage (14) est logé pouvant tourner autour de l'axe longitudinal de la structure de base (2).
